# FASCICULE DE BREVET EUROPEEN

(11) **EP 3 087 885 B1**
(45) Date de publication et mention de la délivrance du brevet: **31.01.2018**
(21) Numéro de dépôt: 16165660.8
(22) Date de dépôt: 15.04.2016
(51) Int. Cl.: A47J 43/07, A47J 43/046

(54) **APPAREIL ÉLECTROMÉNAGER DE PRÉPARATION CULINAIRE**
ELEKTROHAUSHALTSGERÄT ZUR ESSENSZUBEREITUNG
HOUSEHOLD COOKING APPLIANCE

(30) Priorité: 30.04.2015 FR 1553952
(43) Date de publication de la demande: 02.11.2016
(73) Titulaire: SEB S.A., 69130 Ecully (FR)
(72) Inventeur: BLONDEL, Mathilde, 21120 Dienay (FR); TURPIN, Angéline, 21000 Dijon (FR)
(74) Mandataire: Bourrières, Patrice

(56) Documents cités:
- EP-A1- 0 350 380
- FR-A1- 2 996 434

## Description

La présente invention se rapporte au domaine technique général des appareils électroménagers de préparation culinaire comportant un bol de mélange, un moteur pour l'entrainement en rotation d'un outil de travail dans le bol de mélange, et un support comprenant une zone pour poser un récipient, et se rapporte plus particulièrement à un appareil comprenant des moyens pour chauffer le contenu du récipient lorsque ce dernier repose sur la zone du support.

Il est connu, du brevet EP 0 350 380 déposé par la demanderesse, un appareil de préparation culinaire comportant un bol de mélange et un moteur pour l'entrainement en rotation d'un outil de travail dans le bol de mélange. Cet appareil est équipé d'un support amovible comprenant des moyens pour chauffer le contenu du bol de mélange venant reposer sur le support. Un tel appareil présente l'avantage de permettre la réalisation de sauces en effectuant un brassage des aliments simultanément à la chauffe de ces derniers.

Cependant, un tel appareil présente l'inconvénient d'être relativement complexe et coûteux à fabriquer. De plus, un tel appareil ne permet pas de faire chauffer des ingrédients dans un récipient distinct du bol de mélange.

Or, dans l'élaboration de certaines préparations, notamment dans le domaine de la pâtisserie, il est préférable de mélanger les ingrédients dans un bol en commençant par mélanger certains ingrédients, tels des blancs d'oeuf, puis d'incorporer seulement dans un second temps des ingrédients additionnels, par exemple du beurre ou du chocolat. Afin d'obtenir rapidement un mélange homogène de la préparation, il est habituellement nécessaire d'incorporer les ingrédients additionnels sous forme liquide et donc de les amener à leur température de fusion préalablement à leur incorporation sous forme fondu.

Une telle opération de fusion des ingrédients s'effectue généralement au moyen d'une plaque chauffante, équipant le plan de travail de la cuisine, qui est éloignée du lieu où se trouve l'appareil utilisé pour mélanger les ingrédients. Ainsi, l'utilisateur ne peut pas surveiller simultanément le bon déroulement de l'opération de mixage et celle de fusion des ingrédients de sorte qu'il arrive fréquemment que l'opération de fusion conduise à un chauffage excessif des ingrédients qui peut dégrader sa texture et son goût. En particulier, un chauffage excessif des ingrédients peut amener un goût de brûlé se propageant à l'ensemble de la préparation.

Aussi, un but de la présente invention est de remédier à ces inconvénients en proposant un appareil électroménager de préparation culinaire qui procure un grand confort d'utilisation notamment dans l'élaboration des préparations pâtissières nécessitant de faire fondre des ingrédients.

A cet effet, l'invention se rapporte à un appareil électroménager de préparation culinaire comportant un bol de mélange, un moteur pour l'entrainement en rotation d'un outil de travail dans le bol de mélange, et un support comprenant une zone pour poser un récipient, l'appareil ou le récipient comprenant des moyens de chauffage permettant de chauffer le contenu du récipient lorsque ce dernier repose sur la zone du support, caractérisé en ce que le support est intégré dans un boîtier de l'appareil et est mobile entre une position déployée dans laquelle la zone du support se trouve à découvert, en dehors du boîtier, et une position de rangement dans laquelle la zone est escamotée à l'intérieur du boîtier.

L'appareil ainsi réalisé présente l'avantage de procurer une très bonne ergonomie d'utilisation, notamment lors de la réalisation de pâtisserie, en offrant à la fois un bol de mélange dans lequel les ingrédients peuvent être disposés pour leur mixage et un support permettant de chauffer des ingrédients dans un récipient distinct pour les amener à une température de fusion avant leur incorporation dans le bol de mélange. De plus, un tel appareil présente l'avantage d'offrir une parfaite intégration du support dans le boîtier de l'appareil lorsque le support est en position de rangement.

Selon une autre caractéristique de l'invention, le support est monté mobile en translation ou en rotation dans le boîtier.

Une telle caractéristique présente l'avantage de proposer un support mobile qui est simple et économique à réaliser.

Selon une autre caractéristique de l'invention, le boîtier de l'appareil comporte un logement pour la fixation du bol de mélange, le support étant disposé sous le logement lorsqu'il occupe la position de rangement.

Une telle caractéristique permet de disposer le support à proximité du logement pour la fixation du bol de mélange, ce qui permet de rassembler dans une même zone de l'appareil le bol de mélange et le récipient utilisé en association avec le support pour faire fondre les ingrédients.

Selon une autre caractéristique de l'invention, les moyens de chauffage permettent également de chauffer le contenu du bol de mélange lorsque le support occupe la position de rangement.

Une telle caractéristique présente l'avantage de pouvoir utiliser les mêmes moyens de chauffage soit pour chauffer le contenu du bol de mélange reposant sur le logement lorsque le support occupe la position de rangement, soit pour chauffer le contenu du récipient reposant sur le support lorsque ce dernier occupe la position déployée.

Selon encore une autre caractéristique de l'invention, les moyens de chauffage sont intégrés dans le support et sont avantageusement constitués par une résistance blindée, par une résistance sérigraphiée, ou par une bobine pour le chauffage par induction du récipient.

Selon une autre caractéristique de l'invention, ledit support comporte des boutons de commande permettant de commander le fonctionnement des moyens de chauffage.

Une telle caractéristique permet d'améliorer l'ergonomie d'utilisation de l'appareil.

Bien entendu, dans le cas où les moyens de chauffage sont également utilisés pour chauffer le contenu du bol de mélange lorsque le support occupe la position de rangement, les boutons de commande seront disposés sur le boîtier de l'appareil de telle sorte à être accessibles même lorsque le support occupe la position de rangement.

Selon une autre caractéristique de l'invention, l'appareil comporte une unité de contrôle reliée aux moyens de chauffage, l'unité de contrôle comprenant plusieurs cycles de chauffe prédéfinis et sélectionnables par l'utilisateur.

Une telle caractéristique permet de proposer à l'utilisateur un cycle de chauffe particulier, adapté à la recette qu'il souhaite réaliser, afin de garantir le succès de la préparation.

Selon une autre caractéristique de l'invention, l'unité de contrôle comprend au moins un cycle de chauffe adapté pour faire fondre du chocolat, le cycle de chauffe permettant d'amener le contenu du récipient à une température comprise entre 50°C et 60°C.

Selon une autre caractéristique de l'invention, l'unité de contrôle comprend au moins un cycle de chauffe adapté pour réaliser un sirop de sucre, le cycle de chauffe permettant d'amener le contenu du récipient à une température comprise entre 110°C et 120°C.

Selon une autre caractéristique de l'invention, les moyens de chauffage ont une puissance inférieure à 600W et préférentiellement comprise entre 20 et 350W.

Selon une autre caractéristique de l'invention, le support comporte, au niveau de la zone, un capteur de température, tel une résistance CTN ou un thermostat électromécanique.

Selon une autre caractéristique de l'invention, la zone du support prévue pour recevoir le récipient est circulaire, cette zone présentant avantageusement un diamètre compris entre 8 cm et 12 cm, et préférentiellement de l'ordre de 10 cm.

On comprendra mieux les buts, aspects et avantages de la présente invention, d'après la description donnée ci-après de deux modes particuliers de réalisation de l'invention présentés à titre d'exemple non limitatif, en se référant aux dessins annexés dans lesquels :
- la figure 1 est une vue en perspective d'un appareil de préparation culinaire selon un premier mode de réalisation de l'invention, l'appareil étant représenté avec le tiroir chauffant en position de rangement ;
- la figure 2 est une vue de l'appareil de la figure 1 avec le tiroir chauffant représenté en position déployée ;
- la figure 3 est une vue de l'appareil de la figure 2 avec une casserole disposée sur le tiroir chauffant;
- la figure 4 est une vue en coupe schématique du tiroir chauffant ;
- les figures 5 et 6 sont des vues en perspective d'un appareil de préparation culinaire selon un deuxième mode de réalisation de l'invention avec le tiroir chauffant représenté respectivement en position de rangement et en position déployée ;
- la figure 7 est une vue en perspective d'un appareil de préparation culinaire selon une variante de réalisation de l'invention.

Seuls les éléments nécessaires à la compréhension de l'invention ont été représentés. Pour faciliter la lecture des dessins, les mêmes éléments portent les mêmes références d'une figure à l'autre.

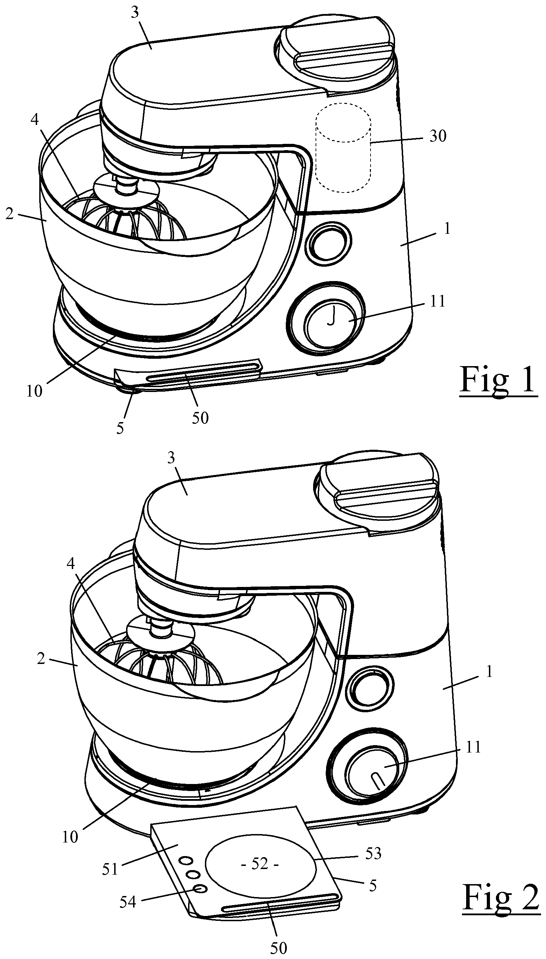

La figure 1 représente un appareil électroménager de préparation culinaire comprenant un boîtier 1 inférieur comportant un logement 10 destiné à recevoir un bol de mélange 2 amovible et comportant un bras 3 articulé solidaire du boîtier 1, le bras 3 renfermant un moteur 30 électrique, illustré en pointillés sur la figure 1, dont la mise en marche et la vitesse sont contrôlées par un bouton de commande 11 disposé sur une face latérale du boîtier 1.

Le bras 3 est mobile en rotation selon un axe sensiblement horizontal entre une position relevée, non représentée sur les figures, dans laquelle le bol de mélange 2 peut être facilement retiré ou fixé sur le logement 10 au moyen d'une liaison baïonnette, et une position de travail, illustrée sur la figure 1, dans laquelle le bras 3 s'étend horizontalement au dessus du logement 10.

Le bras 3 comporte, de manière connue en soi, une platine inférieure comprenant des moyens pour l'entraînement d'un outil de travail, tel un fouet 4, selon un mouvement planétaire, la platine étant mobile en rotation autour d'un axe central et comportant un entraineur assurant l'entraînement en rotation du fouet 4 sur lui-même, cet ensemble rotatif étant relié au moteur 30 par l'intermédiaire d'une chaîne cinématique mettant notamment en oeuvre un train d'engrenage épicycloïdal selon une conception très largement connue de l'homme du métier.

Conformément aux figures 1 et 2, le boîtier 1 inférieur de l'appareil comporte un support 5 mobile constitué par un tiroir qui peut occuper une position de rangement, illustrée sur la figure 1, dans laquelle le tiroir 5 est intégré dans le boîtier 1 de l'appareil et seule une poignée de préhension 50 fait alors saillie sur le bord du boîtier 1, et peut occuper une position déployée, illustrée sur la figure 2, dans laquelle une grande partie du tiroir 5 se trouve en dehors du boîtier 1.

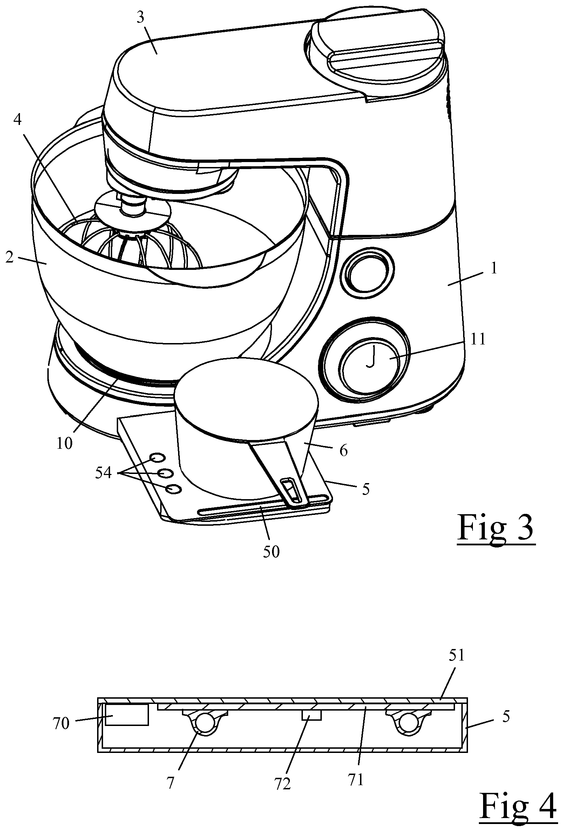

Conformément aux figures 2 et 4, le tiroir 5 comporte une plaque 51 supérieure munie d'une zone 52 plane prévue pour recevoir stablement un récipient 6, telle une casserole, la zone 52 du tiroir se trouvant à découvert, à l'extérieur du boîtier 1, lorsque le tiroir 5 occupe la position déployée et se trouvant masquée à l'intérieur du boîtier 1 lorsque le tiroir 5 occupe la position de rangement.

Le tiroir 5 est, de manière connue en soi, monté mobile en translation au moyen de glissières, non représentées sur les figures, ces dernières comprenant une butée venant bloquer la course du tiroir 5 lorsqu'il atteint la position déployée et comprenant avantageusement des moyens de rappel agissant sur le tiroir 5 pour le ramener automatiquement dans la position de rangement lorsqu'il se trouve à proximité de cette dernière.

Le tiroir 5 est préférentiellement disposé dans une partie basse de l'appareil, avantageusement sous le logement 10 recevant le bol de mélange 2, un tel positionnement à proximité de la face inférieure du boîtier 1 présentant l'avantage de faciliter l'accès à la surface supérieure du tiroir 5. Le positionnement en partie basse du tiroir 5 permet également de limiter le couple de renversement pouvant s'exercer sur l'appareil lorsque la casserole 6 repose sur le tiroir 5, un lest pouvant si nécessaire être disposé dans le boîtier 1 pour augmenter la stabilité de l'appareil.

Le tiroir 5 présente avantageusement des dimensions réduites permettant de limiter son encombrement dans l'appareil, de telles dimensions réduites présentant également l'avantage de limiter la capacité de la casserole 6 pouvant être placée sur la plaque 51 supérieure du tiroir 5. A titre d'exemple le tiroir 5 présente une largeur de l'ordre 13 cm, une profondeur de l'ordre de 14 cm et une hauteur de l'ordre de 2 cm. La zone 52 du tiroir 5 présente avantageusement la forme d'un cercle, d'un diamètre de l'ordre de 10 cm, matérialisé par un marquage 53 visible sur la figure 2, adapté pour recevoir des récipients de petites dimensions, d'une capacité inférieure à 1 litre.

Le tiroir 5 comporte également des boutons de commande 54 disposés en bordure de la zone 52 et permettant de commander des moyens de chauffage 7, intégrés à l'appareil, adaptés pour chauffer le contenu de la casserole 6.

Les moyens de chauffage sont préférentiellement constitués par une résistance électrique 7, par exemple du type résistance blindée tel que cela est illustré sur la figure 4, intégrée dans le tiroir 5 de l'appareil sous la zone 52, avec avantageusement intégration d'une tôle d'aluminium 71 jouant le rôle de diffuseur thermique, de manière à ce que la zone 52 du tiroir 5 se comporte comme une plaque chauffante venant chauffer par conduction thermique le fond de la casserole 6 reposant sur le tiroir 5.

Les moyens de chauffage 7 présentent une puissance de chauffe avantageusement comprise entre 20W et 350W, et préférentiellement entre 30W et 100W, et sont associés à une unité de contrôle 70 permettant de réguler la température de la plaque 51 supérieure du tiroir 5 autour d'une température de consigne.

De manière préférentielle, l'unité de contrôle 70 comporte plusieurs cycles de chauffe prédéfinis qui sont adaptés à la réalisation de différentes recettes dans le domaine de la pâtisserie, ces différents cycles de chauffe étant sélectionnables par l'utilisateur au moyen des boutons de commande 54 placés sur le bord du tiroir 5.

Ainsi, l'unité de contrôle 70 comporte un premier cycle de chauffe adapté à la fonte du chocolat ou du beurre, pour lequel la température de la plaque 51 est régulée autour d'une température de consigne de 55°C de manière à ce que la température des ingrédients dans la casserole 6 reste comprise entre 50°C et 60°C, sans la dépasser.

De manière préférentielle, lorsque ce cycle de chauffe est sélectionné, l'unité de contrôle 70 pilote l'alimentation des moyens de chauffage 7 pour que la puissance moyenne délivrée par ces derniers soit comprise en 30W et 100W durant la phase de montée en température de la plaque 51 jusqu'à la température de consigne, cette régulation de la puissance pouvant par exemple être réalisée en alternant des phases d'alimentation électrique des moyens de chauffage 7 avec des phases de coupure.

Une telle limitation de la puissance moyenne fournie par les moyens de chauffage 7 permet d'obtenir un chauffage doux et lent des ingrédients contenus dans la casserole 6, et d'éviter notamment que la température des ingrédients ne dépasse la température de consigne. En effet, la demanderesse a constaté qu'une puissance de seulement 35W pendant 5 minutes était nécessaire pour faire fondre 100 g de chocolat ou de beurre et l'amener à un état de fusion parfait pour son usage en pâtisserie.

L'unité de contrôle 70 comporte également un deuxième cycle de chauffe qui est lui adapté à la réalisation de sirop de sucre. Dans ce deuxième cycle de chauffe, la température de la plaque 51 est régulée autour d'une température de consigne de 115°C de manière à ce que la température des ingrédients contenus dans le récipient soit comprise entre 110°C et 120°C, sans la dépasser.

Lorsqu'un tel cycle de chauffe est sélectionné, l'unité de contrôle 70 alimente préférentiellement en continu les moyens de chauffage 7 lors de la phase de montée en température de la plaque 51 jusqu'à la température de consigne, de manière à réduire le temps nécessaire à la préparation, le sirop de sucre demandant dix fois plus d'énergie que la fonte du chocolat.

L'unité de contrôle 70 pourra également comprendre d'autres cycles de chauffe prédéfinis, tel un cycle de chauffe pour la pousse du levain dans lequel la température de la plaque 51 est régulée autour d'une température de consigne de 30°C ou un cycle de chauffe dans lequel la température de la plaque 51 est régulée autour d'une température de 80°C pour favoriser la fluidification de la crème, pour faire fondre des gelées de fruit ou incorporer à chaud des gélifiants de type gélatine.

L'unité de contrôle 70 de l'appareil sera avantageusement réalisée, de manière connue en soi, au moyen de composants électroniques, et comprendra par exemple un microprocesseur associé à une mémoire dans laquelle sont stockés les différents programmes de chauffage, le microprocesseur recevant le signal de température au moyen d'un capteur 72 de type CTN disposé sous la plaque 51 supérieure du tiroir 5. Dans une version moins onéreuse de l'appareil, l'unité de contrôle 70 pourra être constituée également par un simple thermostat électromécanique dont la température de consigne sera modifiée au moyen des boutons de commande 54 présents sur le tiroir 5.

L'appareil ainsi réalisé présente l'avantage d'être particulièrement adapté à la réalisation de pâtisserie et notamment de la mousse au chocolat.

En effet, lorsque l'utilisateur à besoin de mélanger des ingrédients, par exemple des blancs d'oeufs pour réaliser des blancs en neige, il lui suffit de les introduire dans le bol de mélange 2, puis de mettre en route le moteur 30 de l'appareil en tournant le bouton de commande 11 de manière à ce que le fouet 4 soit entrainé en rotation selon un mouvement planétaire.

Pendant que cette tâche de mixage des blancs d'oeufs est réalisée par l'appareil, il peut également utiliser le tiroir 5 chauffant de l'appareil pour faire fondre le chocolat. Il lui suffit pour cela de tirer sur la poignée de préhension 50 afin d'extraire le tiroir 5 du boîtier 1 jusqu'à l'amener dans la position déployée illustrée sur la figure 2.

L'utilisateur met alors le chocolat dans une casserole 6 qu'il place sur le tiroir 5 au niveau de la zone 52, puis appuie sur le bouton du tiroir 5 correspondant à la fonction fonte de chocolat.

L'unité de contrôle 70 pilote alors le fonctionnement des moyens de chauffage 7 pour effectuer une chauffe lente et douce du chocolat en amenant progressivement la plaque 51 supérieure jusqu'à la température de consigne de 55°C.

Lorsque la température de consigne est atteinte, un indicateur lumineux peut être activé sur l'appareil ainsi qu'une alarme sonore pour indiquer à l'utilisateur que le chocolat est parvenu à la température idéale de fusion.

L'utilisateur n'a plus alors qu'à saisir la casserole 6 et à déverser son contenu dans le bol de mélange 2 afin d'incorporer le chocolat fondu à la préparation.

Un tel appareil présente donc l'avantage de procurer une grande ergonomie d'utilisation, en permettant de réaliser simultanément le mixage des ingrédients dans le bol de mélange 2 et le chauffage d'ingrédients dans une casserole 6 rapportée sur le tiroir 5. De plus, un tel appareil présente l'avantage de conserver un encombrement réduit lorsque le tiroir 5 occupe la position de rangement.

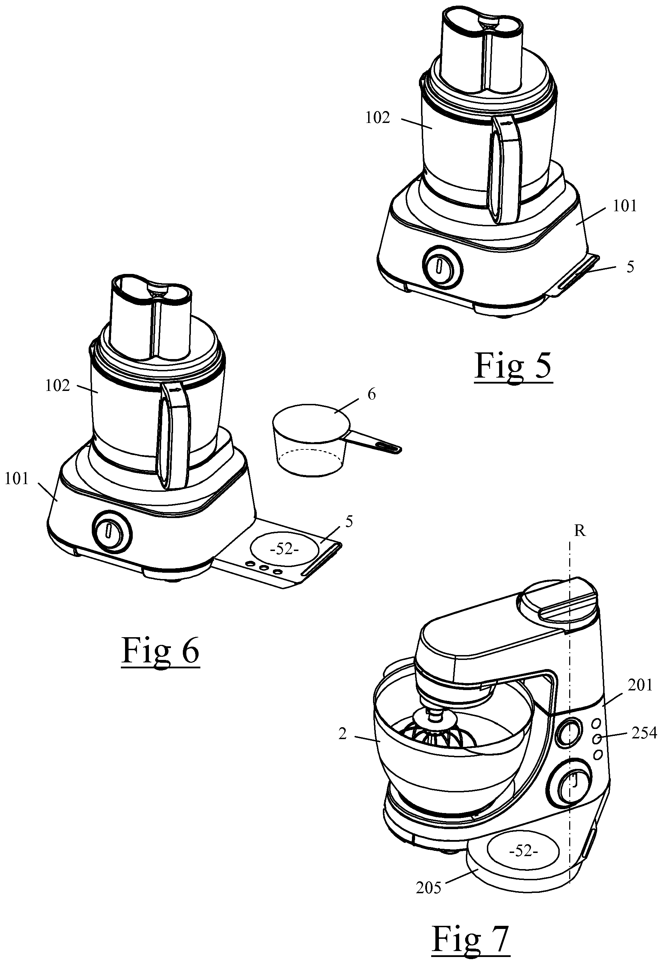

Les figures 5 et 6 illustrent un appareil électroménager qui se différencie de l'appareil illustré dans le premier mode de réalisation seulement par l'architecture générale de l'appareil. En effet, dans ce second mode de réalisation, l'appareil comporte un boîtier 101 inférieur compact intégrant un moteur qui est surmonté directement par un bol de mélange 102 renfermant un outil rotatif, l'appareil comportant un tiroir 5 monté mobile en translation dans le boîtier 101 qui est en tout point conforme à celui décrit pour le premier mode de réalisation.

Un tel appareil présente les mêmes avantages techniques que ceux décrits pour le premier mode de réalisation.

La figure 7 illustre une variante de réalisation dans laquelle l'appareil comprend une architecture semblable à celle de l'appareil décrit dans le premier mode de réalisation mais comporte un boîtier 201 comprenant, à la place du tiroir coulissant, un support 205 constitué par un socle mobile en rotation autour d'un axe R.

Dans cette variante de réalisation, le socle 205 comporte une zone 52 plane prévue pour recevoir stablement un récipient, telle une casserole, et peut occuper une position déployée, illustrée sur la figure 7, dans laquelle la zone 52 du socle 205 se trouve à découvert à l'extérieur du boîtier 201.

Le socle 205 peut également occuper une position de rangement, non illustrée sur les figures, dans laquelle il est masqué à l'intérieur du boîtier 201 après avoir pivoté de l'ordre de 45° autour de l'axe R, suite à une action manuelle de l'utilisateur ou par l'action d'un moteur, le socle 205 se trouvant alors aligné avec le boîtier 201.

Dans cette variante de réalisation, l'appareil comporte des boutons de commande 254 disposés avantageusement sur une face latérale du boîtier 201 de manière à rester accessibles à l'utilisateur lorsque le socle 205 occupe la position de rangement.

Les boutons de commande 254 contrôlent des moyens de chauffage permettant de chauffer le contenu de la casserole lorsque cette dernière repose sur la zone 52, les moyens de chauffage pouvant être semblables à ceux décrits plus en détails dans le premier mode de réalisation.

De manière préférentielle, les moyens de chauffage portés par le socle 205 sont également utilisés pour chauffer le contenu du bol de mélange 2 lorsque le socle 205 occupe la position de rangement.

A cet effet, un diffuseur thermique, non représenté sur les figures, sera avantageusement prévu entre le socle 205 et le bol de mélange 2, lorsque les moyens de chauffage sont constitués par une résistance électrique, afin d'optimiser la transmission de la chaleur produite par le socle 205 vers le bol de mélange 2 lorsque le socle 205 occupe la position de rangement.

Dans un mode de réalisation préférentiel, les moyens de chauffage équipant l'appareil seront du type à induction et le bol de mélange 2 comportera un fond en matériau ferromagnétique afin de capter directement le flux inductif produit par un inducteur intégré dans le socle 205.

La variante de réalisation ainsi réalisée présente l'avantage de permettre l'utilisation des mêmes moyens de chauffage pour chauffer le contenu du bol de mélange lorsque le socle est en position de rangement et pour chauffer le contenu d'une casserole reposant sur le socle lorsque ce dernier occupe la position déployée.

De plus, une telle variante de réalisation, dans laquelle le support comprenant la zone dédiée au chauffage de la casserole est mobile en rotation plutôt qu'en translation, présente l'avantage de générer des contraintes moins importantes sur les éventuels câbles électriques servant à la connexion d'organes portés par le support lors de son déplacement de la position de rangement à la position déployée.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une autre variante de réalisation non représentée, les moyens de chauffage pourront être constitués par un inducteur intégré dans le tiroir et alimenté par un courant électrique alternatif de manière à chauffer par induction une casserole, comprenant un fond en matériau ferromagnétique, placée sur la zone dédiée du tiroir.

Dans une autre variante de réalisation non illustrée, les moyens de chauffage pourront également être constitués par une résistance sérigraphiée disposée, de manière connue en soi, sous la plaque supérieure du support, une telle résistance sérigraphiée présentant l'avantage de posséder une très faible inertie thermique.

Dans encore une autre variante de réalisation, les moyens de chauffage pourront également être constitués par une résistance sérigraphiée intégrée directement dans le fond de la casserole spécifique. Dans une telle variante, la casserole sera par exemple munie d'un connecteur électrique venant se connecter avec un connecteur électrique de forme complémentaire porté par le support, lorsque la casserole est placée sur la zone du support, de manière à permettre l'alimentation électrique de la résistance électrique présente dans le fond de la casserole.

## Revendications

1. Appareil électroménager de préparation culinaire comportant un bol de mélange (2 ; 102), un moteur (30) pour l'entrainement en rotation d'un outil de travail (4) dans le bol de mélange (2 ; 102), et un support (5; 205) comprenant une zone (52) pour poser un récipient (6), l'appareil ou le récipient (6) comprenant des moyens de chauffage (7) permettant de chauffer le contenu du récipient (6) lorsque ce dernier repose sur la zone (52) du support (5 ; 205), **caractérisé en ce que** le support (5; 205) est intégré dans un boîtier (1 ; 101 ; 201) de l'appareil et est mobile entre une position déployée dans laquelle la zone (52) du support (5 ; 205) se trouve à découvert, en dehors du boîtier (1 ; 101 ; 201), et une position de rangement dans laquelle la zone (52) est escamotée à l'intérieur du boîtier (1 ; 101 ; 201).

2. Appareil électroménager de préparation culinaire selon la revendication 1, **caractérisé en ce que** le support (5 ; 205) est monté mobile en translation ou en rotation dans le boîtier (1 ; 101 ; 201).

3. Appareil électroménager de préparation culinaire selon l'une quelconque des revendications 1 à 2, **caractérisé en ce que** le boîtier (1 ; 101 ; 201) de l'appareil comporte un logement (10) pour la fixation du bol de mélange (2) et **en ce que** le support (5 ; 205) est disposé sous le logement (10) lorsqu'il occupe la position de rangement.

4. Appareil électroménager de préparation culinaire selon la revendication 3, **caractérisé en ce que** les moyens de chauffage (7) permettent également de chauffer le contenu du bol de mélange (2 ; 102) lorsque le support (5 ; 205) occupe la position de rangement.

5. Appareil électroménager de préparation culinaire selon l'une quelconque des revendications 1 à 4, **caractérisé en ce que** les moyens de chauffage (7) sont intégrés dans le support (5 ; 205) et sont avantageusement constitués par une résistance blindée, par une résistance sérigraphiée, ou par une bobine pour le chauffage par induction du récipient (6).

6. Appareil électroménager de préparation culinaire selon l'une quelconque des revendications 1 à 5, caractérisé en ce le support (5) comporte des boutons de commande (54 ; 254) permettant de commander le fonctionnement des moyens de chauffage (7).

7. Appareil électroménager de préparation culinaire selon l'une quelconque des revendications 1 à 6, **caractérisé en ce qu'**il comporte une unité de contrôle (70) reliée aux moyens de chauffage (7), ladite unité de contrôle (70) comprenant plusieurs cycles de chauffe prédéfinis et sélectionnables par l'utilisateur.

8. Appareil électroménager de préparation culinaire selon la revendication 7, **caractérisé en ce que** l'unité de contrôle (70) comprend au moins un cycle de chauffe adapté pour faire fondre du chocolat, ledit cycle de chauffe permettant d'amener le contenu du récipient (6) à une température comprise entre 50°C et 60°C.

9. Appareil électroménager de préparation culinaire selon l'une quelconque des revendications 7 à 8, **caractérisé en ce que** ladite unité de contrôle (70) comprend au moins un cycle de chauffe adapté pour réaliser un sirop de sucre, ledit cycle de chauffe permettant d'amener le contenu du récipient (6) à une température comprise entre 110°C et 120°C.

10. Appareil électroménager de préparation culinaire selon l'une quelconque des revendications 1 à 9, **caractérisé en ce que** les moyens de chauffage (7) ont une puissance inférieure à 600W et préférentiellement comprise entre 20 et 350W.

11. Appareil électroménager de préparation culinaire selon l'une quelconque des revendications 1 à 10, **caractérisé en ce que** le support (5 ; 205) comporte, au niveau de la zone (52), un capteur de température (72), tel une résistance CTN ou un thermostat électromécanique.

12. Appareil électroménager de préparation culinaire selon l'une quelconque des revendications 1 à 11, **caractérisé en ce que** la zone (52) du support (5 ; 205) prévue pour recevoir le récipient (6) est circulaire, ladite zone (52) présentant avantageusement un diamètre compris entre 8 cm et 12 cm, et préférentiellement de l'ordre de 10 cm.

## Patentansprüche

1. Elektrohaushaltsgerät zur Speisenzubereitung, das eine Rührschüssel (2; 102), einen Motor (30) für den Drehantrieb eines Arbeitswerkzeugs (4) in der Rührschüssel (2; 102), und eine Halterung (5; 205) umfasst, die einen Bereich (52) zum Aufstellen eines Gefäßes (6) enthält, wobei das Gerät oder das Gefäß (6) Heizmittel (7) enthält, die es ermöglichen, den Inhalt des Gefäßes (6) zu erhitzen, wenn letzteres auf dem Bereich (52) der Halterung (5; 205) ruht, **dadurch gekennzeichnet, dass** die Halterung (5; 205) in einem Gehäuse (1; 101; 201) des Gerätes integriert ist und zwischen einer ausgezogenen Stellung, in der der Bereich (52) der Halterung (5; 205) außerhalb des Gehäuses (1; 101; 201) freiliegt, und einer Aufbewahrungsstellung beweglich ist, in der der Bereich (52) in das Innere des Gehäuses (1; 101; 201) eingeschoben ist.

2. Elektrohaushaltsgerät zur Speisenzubereitung nach Anspruch 1, **dadurch gekennzeichnet, dass** die Halterung (5; 205) translations-oder drehbeweglich im Gehäuse (1; 101; 201) montiert ist.

3. Elektrohaushaltsgerät zur Speisenzubereitung nach einem der Ansprüche 1 bis 2, **dadurch gekennzeichnet, dass** das Gehäuse (1; 101; 201) des Gerätes eine Aufnahme (10) zum Fixieren der Rührschüssel (2) umfasst und dadurch, dass die Halterung (5; 205) unter der Aufnahme (10) angeordnet ist, wenn sie die Aufbewahrungsstellung einnimmt.

4. Elektrohaushaltsgerät zur Speisenzubereitung nach Anspruch 3, **dadurch gekennzeichnet, dass** die Heizmittel (7) es ebenfalls ermöglichen, den Inhalt der Rührschüssel (2; 102) zu erhitzen, wenn die Halterung (5; 205) die Aufbewahrungsstellung einnimmt.

5. Elektrohaushaltsgerät zur Speisenzubereitung nach einem der Ansprüche 1 bis 4, **dadurch gekennzeichnet, dass** die Heizmittel (7) in der Halterung (5; 205) integriert sind und vorteilhafterweise aus einem gekapselten Widerstand, aus einem Siebdruckwiderstand oder aus einer Spule zum Erhitzen des Gefäßes (6) durch Induktion bestehen.

6. Elektrohaushaltsgerät zur Speisenzubereitung nach einem der Ansprüche 1 bis 5, **dadurch gekennzeichnet, dass** die Halterung (5) Bedientasten (54; 254) umfasst, die es ermöglichen, die Funktion der Heizmittel (7) zu bedienen.

7. Elektrohaushaltsgerät zur Speisenzubereitung nach einem der Ansprüche 1 bis 6, **dadurch gekennzeichnet, dass** es eine Steuereinheit (70) umfasst, die mit den Heizmitteln (7) verbunden ist, wobei die Steuereinheit (70) mehrere vordefinierte und durch den Benutzer auswählbare Heizzyklen enthält.

8. Elektrohaushaltsgerät zur Speisenzubereitung nach Anspruch 7, **dadurch gekennzeichnet, dass** die Steuereinheit (70) mindestens einen Heizzyklus enthält, der zum Schmelzen von Schokolade geeignet ist, wobei der Heizzyklus es ermöglicht, den Inhalt des Gefäßes (6) auf eine Temperatur im Bereich zwischen 50 °C und 60 °C zu bringen.

9. Elektrohaushaltsgerät zur Speisenzubereitung nach einem der Ansprüche 7 bis 8, **dadurch gekennzeichnet, dass** die Steuereinheit (70) mindestens einen Heizzyklus enthält, der zum Ausführen eines Zuckersirups geeignet ist, wobei der Heizzyklus es ermöglicht, den Inhalt des Gefäßes (6) auf eine Temperatur im Bereich zwischen 110 °C und 120 °C zu bringen.

10. Elektrohaushaltsgerät zur Speisenzubereitung nach einem der Ansprüche 1 bis 9, **dadurch gekennzeichnet, dass** die Heizmittel (7) eine Leistung von unter 600 W und bevorzugt im Bereich zwischen 20 und 350 W besitzen.

11. Elektrohaushaltsgerät zur Speisenzubereitung nach einem der Ansprüche 1 bis 10, **dadurch gekennzeichnet, dass** die Halterung (5; 205) im Gebiet des Bereiches (52) einen Temperatursensor (72) umfasst, wie etwa einen NTC-Widerstand oder einen elektromechanischen Thermostat.

12. Elektrohaushaltsgerät zur Speisenzubereitung nach einem der Ansprüche 1 bis 11, **dadurch gekennzeichnet, dass** der Bereich (52) der Halterung (5; 205), der dafür vorgesehen ist, das Gefäß (6) aufzunehmen, kreisrund ist, wobei der Bereich (52) vorteilhafterweise einen Durchmesser im Bereich zwischen 8 cm und 12 cm, und bevorzugt in der Größenordnung von 10 cm aufweist.

## Claims

1. Household appliance for culinary preparation comprising a mixing bowl (2; 102), a motor (30) for rotationally driving a work implement (4) in the mixing bowl (2; 102), and a support (5; 205) comprising a zone (52) for placing a vessel (6), the appliance or the vessel (6) comprising heating means (7) enabling the heating the contents of the vessel (6) when the latter rests on the zone (52) of the support (5; 205), **characterised in that** the support (5; 205) is integrated in a case (1; 101; 201) of the appliance and is moveable between a deployed position in which the zone (52) of the support (5; 205) is found exposed, outside the case (1; 101; 201), and a storage position in which the zone (52) is retracted inside the case (1; 101; 201).

2. Household appliance for culinary preparation according to claim 1, **characterised in that** the support (5; 205) is mounted moveably in translation or in rotation in the case (1; 101; 201).

3. Household appliance for culinary preparation according to any one of claims 1 to 2, **characterised in that** the case (1; 101; 201) of the appliance comprises a housing (10) for fixing the mixing bowl (2) and **in that** the support (5; 205) is arranged under the housing (10) when it occupies the storage position.

4. Household appliance for culinary preparation according to claim 3, **characterised in that** the heating means (7) also enable the heating of the contents of the mixing bowl (2; 102) when the support (5; 205) occupies the storage position.

5. Household appliance for culinary preparation according to any one of claims 1 to 4, **characterised in that** the heating means (7) are integrated in the support (5; 205) and is advantageously constituted by a shielded resistance, by a printed resistance, or by a coil for the induction heating of the vessel (6).

6. Household appliance for culinary preparation according to any one of claims 1 to 5, **characterised in that** the support (5) comprises control buttons (54; 254) for controlling the operation of the heating means (7).

7. Household appliance for culinary preparation according to any one of claims 1 to 6, **characterised in that** it comprises a control unit (70) connected to the heating means (7), said control unit (70) comprising several predefined heating cycles that can be selected by the user.

8. Household appliance for culinary preparation according to claim 7, **characterised in that** the control unit (70) comprises at least one heating cycle adapted to melt chocolate, said heating cycle enabling the contents of the vessel (6) to be brought to a temperature between 50°C and 60°C.

9. Household appliance for culinary preparation according to any one of claims 7 to 8, **characterised in that** the control unit (70) comprises at least one heating cycle adapted to produce a sugar syrup, said heating cycle enabling the contents of the vessel (6) to be brought to a temperature between 110°C and 120°C.

10. Household appliance for culinary preparation according to any one of the claims 1 to 9, **characterised in that** the heating means (7) has a power of less than 600 W and preferably between 20 and 350 W.

11. Household appliance for culinary preparation according to any one of claims 1 to 10, **characterised in that** the support (5; 205) comprises, at the zone (52), a temperature sensor (72), such as an NTC resistance or an electromechanical thermostat.

12. Household appliance for culinary preparation according to any one of claims 1 to 11, **characterised in that** the zone (52) of the support (5; 205) provided to receive the vessel (6) is circular, said zone (52) having advantageously a diameter between 8 cm and 12 cm, and preferably around 10 cm.
